# EUROPEAN PATENT SPECIFICATION

(11) **EP 3 019 551 B1**
(45) Date of publication and mention of the grant of the patent: **22.01.2020**
(21) Application number: 14736836.9
(22) Date of filing: 08.07.2014
(51) Int. Cl.: C08J 7/04, B65D 1/02

(54) **PROCESS OF COATING PLASTIC CONTAINERS WITH GAS BARRIER COATING TO ACHIEVE IMPROVED MOISTURE RESISTIVITY**
VERFAHREN ZUM BESCHICHTEN EINES KUNSTSTOFFBEHÄLTERS MIT GASBARRIEREBESCHICHTUNG ZUM ERZIELEN EINES VERBESSERTEN FEUCHTIGKEITSWIDERSTANDES
PROCÉDÉ D'ENDUCTION DES RÉCIPIENTS EN PLASTIQUE AVEC REVÊTEMENT BARRIÈRE AUX GAZ POUR OBTENIR UNE RÉSISTIVITÉ AMÉLIORÉE À L'HUMIDITÉ

(30) Priority: 12.07.2013 EP 13176399
(43) Date of publication of application: 18.05.2016
(73) Proprietor: Kuraray Europe GmbH, 65795 Hattersheim (DE); Container Corporation of Canada, Richmond Hill, ON L4B 1H1 (CA)
(72) Inventor: FRANK, Michael, 55129 Mainz (DE); FUSS, Robert W., 65835 Liederbach (DE); GOTTLIEB, Norman James, Thornhill, Ontario L3T 3A7 (CA)
(74) Representative: Janßen, Christian Oliver
(86) International application number: PCT/EP2014/064659
(87) International publication number: WO 2015/004164

(56) References cited:
- EP-A1- 2 263 869
- EP-A1- 2 532 600
- WO-A1-03/037969
- KEVIN M KIT ET AL: "Morphology and Barrier Properties of Oriented Blends of Poly(Ethylene Terephthalate) and Poly(Ethylene 2,6-Naphthalate) with Poly(Ethylene-co-Vinyl Alcohol)", POLYMER ENGINEERING AND SCIENCE, vol. 35, no. 8, 1 April 1995 (1995-04-01), pages 680-692, XP055086905,
- KUCUKPINAR E ET AL: "Effect of absorbed water on oxygen transport in EVOH matrices. A molecular dynamics study", POLYMER, ELSEVIER SCIENCE PUBLISHERS B.V, GB, vol. 45, no. 10, 1 May 2004 (2004-05-01), pages 3555-3564, XP004502986, ISSN: 0032-3861, DOI: 10.1016/J.POLYMER.2004.03.024

## Description

### Field of the Invention

This invention relates to plastic containers having a scratch and moisture resistant barrier coating against oxygen or carbon dioxide. Furthermore, the invention relates to a process for manufacturing of such containers.

### Background of the Invention

Plastic containers for food and beverages from polyethyleneterephthalate (PET), polypropylene (PP) or polyethylene (PE) are long known and are mostly produced in stretch blow molding processes.

It is also known to apply a barrier coating on such containers in order to reduce the permeation of gases, especially oxygen or carbon dioxide into or out of the container, thereby improving the shelf life of the packed goods.

For example, EP 2532600, EP 2431409, EP 2532600, GB 879595, GB 2337470, WO 2004/089624, DE 10153210 and DE 10207592 A1 describe the use of polyvinyl alcohol as gas barrier on PET bottles with an additional top coat comprising polyvinyl butyral to improve the water resistance of the barrier coating. It is further known from WO 03/037969 to use EVA (a terpolymer comprising ethylene, vinyl acetate and vinyl alcohol as monomer units) instead of polyvinyl alcohol. Such multilayer coatings show a good barrier performance against oxygen and carbon dioxide, scratch resistance and are recyclable after mechanically destroying the top layer due the to the water solubility of the barrier coating.

The gas barrier disclosed in the prior art consists of or comprises polyvinylalcohol (PVA). PVA is a polymer obtained by hydrolysis of polyvinylacetate and contains vinylalcohol and vinylacetate subunits. Usually, PVA has a hydrolysation degree of 90 - 99 Mol%, which means that 1 - 10 Mol% vinylacetate subunits are still present in the polymer chain. Depending on the amount of vinylacetate subunits, PVA is more or less soluble in water. Therefore, coatings comprising PVA have a certain moisture sensitivity and can deteriorate under humid conditions, which has a negative impact on the overall gas barrier properties of the coating.

To improve the moisture sensitivity of gas barrier coating comprising PVA, JP 11349713 proposes a polyvinylalcohol/polyvinylacetal/ethylene terpolymer as gas barrier coating of PET substrates. The gas barrier coating according to JP 11349713 has a low adhesion to the PET surface, which makes the coating vulnerable to mechanical and moisture impact and does not provide sufficient adhesion on the substrate. Insufficient mechanical stability may lead to delamination during the expansion process of coated preforms.

Object of the invention was to improve the mechanical stability of a gas barrier coating on a PET surface, especially for subsequent stretch-blown processing of the PET surface.

Surprisingly is was found that although the gas barrier coating disclosed in JP 11349713 contains hydrophobic groups derived from ethylene, adhesion on polyvinylacetal is not impaired during stretching as compared to polyvinylalcohol. In addition, the moisture sensitivity is reduced, thereby improving the gas barrier features of the coating under humid conditions.

### Object of the invention

The present invention relates to a process for producing a plastic container with a barrier coating comprising the steps a) applying at least one coating layer of a first polyvinyl acetal on at least a part of the plastic container; b) applying at least one coating layer of vinylalcohol/vinylacetate/ethylene terpolymer (PVAE) on the first polyvinyl acetal layer; c) applying at least one top coating layer of a second polyvinyl acetal on the PVAE layer.

The first layer of polyvinyl acetal provided in step a) serves as base coating for the subsequent added barrier coating of polyvinyl alcohol and the second (top) layer of PVAE. The first base coating of polyvinyl acetal has strong adherence to the plastic material of the container and provides support for the PVAE layer provided in step b) and the top coating layer of polyvinyl acetal provided in step c).

Since PVAE adheres very well on polyvinyl acetal and vice versa, the subsequent added layers are likewise mechanical stable and result in a mechanically stable overall coating after the final shaping process of the container. PVAE reduces the gas permeability (especially O₂ and CO₂) of the substrate significantly, thereby improving the shelf-life of packed foods, soft drinks or beer.

The barrier coating comprising the layers manufactured in steps a, b and c) can be applied on at least a part of the outside or the inside of the containers. In another embodiment of the nvention, the barrier coating may be applied to at least a part of the outside and inside of the plastic container or a preform thereof.

The term "at least a part of the outside or the inside of the container" refers to any part of the container where the gas barrier of the plastic material shall be improved by the method of the invention. In one variant of the invention, the entire outer or inner surface of the container is coated. In another variant, only the parts of the container are coated which have a lower gas barrier as other parts. It is within the invention to coat only the lid of a container which has on other parts an sufficient low gas permeability. For example, containers form multilayer cardboard have a good gas barrier, but are closed with lids having a low gas barrier. To improve the overall gas barrier and the shelf life of the packed good, it is sufficient to provide the lid with a barrier coating of the present invention.

In the process according to the invention, the plastic container is optionally prior to step a) pre-treated by chemical roughening, oxyfluorination, corona, electron beam or flame treatment.

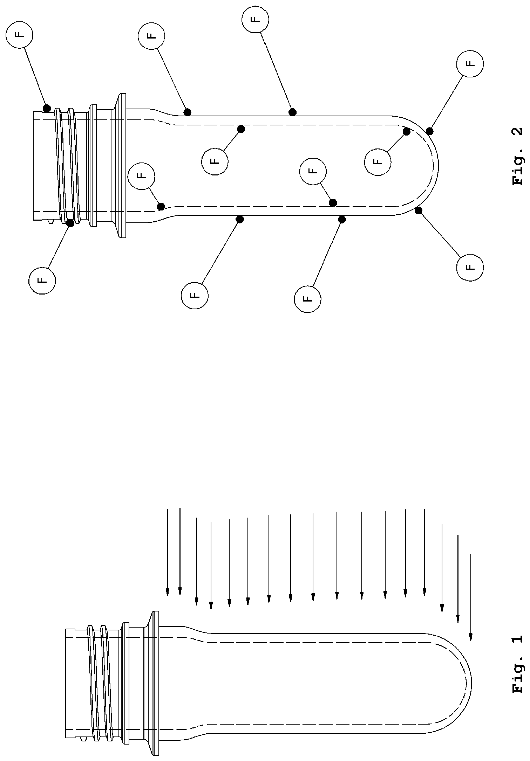

The plastic material is optionally pre-treated or activated on the inside and/or outside. Fig. 1 shows a typical preform for a bottle treaded with corona, electronic beam or plasma.

Mechanical roughening can be achieved by a sandblast process, wherein the inside and/or outside surface of the container is provided with a roughness Rz of at least 100 µm, preferably 200 µm.

Preferably the pre-treatment or activation of at least a part of the surface of the plastic material results in an increase of the surface energy of the treated part of the plastic material of at least 25%, more preferably of at least 50%, based on the surface energy prior to treatment.

Untreated PET shows a surface energy of 30-45 mJ/m². Accordingly, if the plastic material consists of PET, surface energy after pre-treatment should be at least 50 mJ/m², preferable at least 55 mJ/m² and especially at least 60 mJ/m², the upper range being 150 mJ/m².

Untreated PP has a surface energy of 25-35 mJ/m². Accordingly, if the plastic material consists of PP, surface energy after pre-treatment should be at least 45 mJ/m², preferable at least 50 mJ/m² and especially at least 55 mJ/m², the upper range being 150 mJ/m². The surface energy is measured according the manual of Accu Dyne Test™ Marker Pens.

Oxyfluorination is described in detail for example in WO2004/089624 or US 5,900,321. The pre-treatment by oxyfluorination according to this invention may be conducted by exposing at least a part of the surface of the plastic material to a fluorine-containing gas mixture containing 0.01% to 5 % by volume fluorine and optionally inert gases like nitrogen or air, or an additional reactive species such as chlorine or oxygen. Oxyfluorination for this invention may take place at a pressure of 10 - 10000 kPa, preferably 100 - 5000 kPa at a temperature of 10 - 90°C with a time of exposure of 1 to 60 minutes.

Fig. 2 shows a pre-treated preform of a bottle, for example after Oxyfluorination. "f" in Fig. 2 stands for the pre-treated / oxyfluorinated sites on the preform. The preform may be pre-treaded on the inside (i.e. the side of the container which will be in contact with the packed goods) and/or on the outside. Preferable, the preform is pre-treaded only on the outside.

Pre-treatment can enhance the adherence of the layers to the substrate. However, pre-treatment is an additional process step and the method of the invention provides in most cases mechanical stable coating layers which can be stretch-blown without cracks or delamination without pre-treatment. Accordingly, the present process can be performed in that the at least one coating layer of a first polyvinyl acetal is applied on the plastic container without pre-treatment.

Optionally after cleaning and pre-treatment, the first (base) layer of polyvinyl acetal is applied to the container.

For the first and second coating, polyvinyl acetal as the reaction product of polyvinyl alcohol with one or more aldehydes like formaldehyde, acetaldehyde, n-Butyraldehyde or iso-Butyraldehyde is used.

Suitable first and second polyvinyl acetal can be selected independently from the group consisting of polyvinyl(n)butyral, polyvinyl(iso)butyral, polyvinyl acetyl-co-(n)butyral, crosslinked polyvinyl(n)butyral, crosslinked polyvinyl(iso)butyral, Vinylalcohol/vinylacetate/ethylene terpolymer-(n)butyral, Vinylalcohol/vinylacetate/ethylene terpolymer-acetyl-co-(n)butyral.

The acetalisation degree of the first and second polyvinyl acetal can be the same or different, but should be between 70 and 90 mol%, the polyvinyl alcohol content between 8 and 30 mol%.

Preferable, the first polyvinyl actetal has a viscosity of 10 to 70 m*Pas and/or second polyvinyl actetal has a viscosity of 50 to 500 m*Pas.

Viscosity of polyvinyl actetal is measured in a solution of 10 % by Wght in ethanol containing 5 Wght. % water at 20°C

The polyvinyl acetal is applied on the surface of the container and/or the polyvinyl alcohol layer as solution in an organic solvent, for example as solution in methyl ethyl ketone (MEK), methanol, acetone or ethanol for example by dip-coating, flowing or spraying. The concentration of the coating solution is preferable between 5 and 25% by Weight. The base layer from polyvinyl acetal thus applied may have a thickness of 0,01 to 5 µm.

Superfluous coating material may be removed by spinning of the plastic material. The coating is dried at room temperature for 4-8 hours (overnight) or at elevated temperature in an oven with temperatures between 30 and 60 °C for 0,5 to 2 hours. With the aid of appropriate machinery like conveyors with heaters, fast drying/curing is obtained in 15-30 sec.

After the first polyvinyl acetal layer is applied to at least a part of the container, the plastic material is coated with PVAE as barrier coating on the first layer of polyvinyl acetal. Preferably, the PVAE has a degree of saponification/hydrolisation of 80 to 99 Mol%, preferable of 90 to 99 Mol%. The PVAE layer does not contain a plasticizer except some traces of moisture originating from the coating process.

The PVAE used in the present invention has a preferable a content of ethylene groups of 1 to 20 mol%, more preferred between 3 and 10 Mol%. The degree of polymerisation is between 200 and 5000, preferable between 400 and 3000 or 700 and 1000.

Preferable, the PVAE has a viscosity of 10 - 100 m*Pas Viscosity of the PVAE is measured in a solution of 10 % by Wght in water at 20°C.

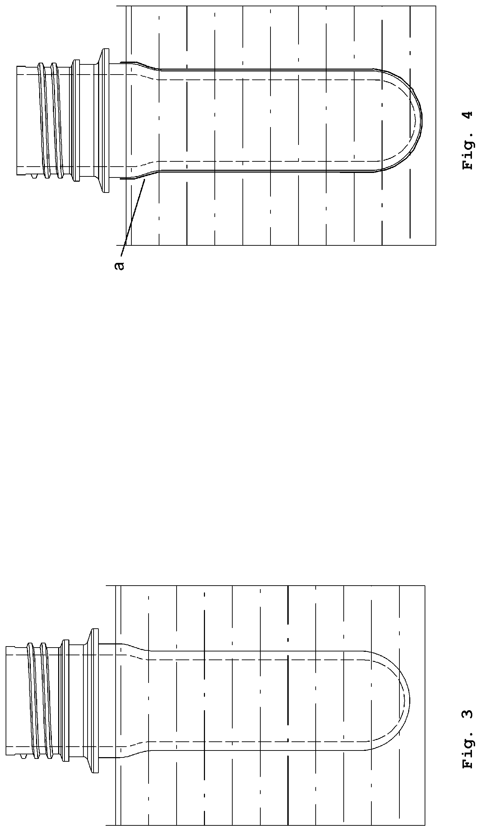

The coating layer from PVAE may have a thickness of 0.01 to 5 µm. Preferable, the PVAE is applied as aqueous solution, for example by dip-coating, flowing or spraying. The concentration of the coating solution is preferable between 5 and 25% by weight. Fig. 3 shows the coating of a preform having a base coating by dipping into an aqueous solution of polyvinyl alcohol.

Again, superfluous coating material may be removed by spinning of the plastic material. The barrier-coated plastic material is dried to remove essential all water at ambient temperature of 10 to 90°C, preferable 10 - 50 °C optionally at reduced pressure and then subjected to the protective top-coating with the second polyvinyl acetal.

First and second polyvinyl acetals may be different or identical polymers. The process of coating and drying of the first and second layer of polyvinyl acetal may be different or identical. In order to reduce the complexity of the process it is preferred to utilize identical polyvinyl acetals and methods for both steps a) and c) .

Fig. 4 shows the coating of a preform with a base coating of polyvinyl acetal a) and a barrier coating of polyvinyl alcohol b) by dipping into a solution of polyvinyl acetal (step c).

The barrier coating of steps a, b) and c) can be applied on at least a part of the outside or the inside of the plastic container. It is furthermore possible to apply the barrier coating of steps a, b) and c) on at least a part of the inside and at least a part of the outside of the plastic container.

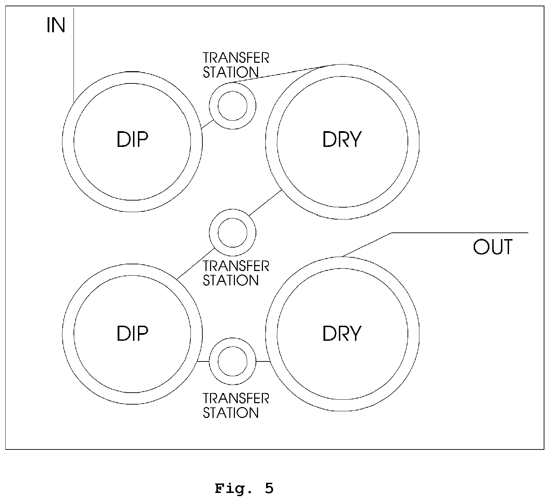

Fig. 5 shows a flow sequence for a preform coating line, where the coating steps a), b) are conducted by dipping the optionally pre-treated perform into solutions of polyvinyl alcohol and polyvinyl acetal with subsequent drying stations. Step c) is performed in the coating and drying station of step a). The preforms are transferred between the coating and drying station via transfer stations with appropriate machinery.

It is possible to incorporate dyes or pigments in the barrier coating, the base and/or the protective top coating. Suitable pigments are for example SiO₂, Al₂O₃, or TiO₂, as dyes "Rhenol"-type dyes from Clariant can be used. The concentration of dyes or pigments in each layer can range from 0.01 to 5 Wght%, based on the polymer.

Subsequent to coating and drying according to the steps a, b, c, the plastic material may be final shaped into a container by a blow-forming process a blowing process like stretch blowing or injection stretch blow moulding. The optional step d) may be performed prior or after the blowing process.

The plastic material to be coated with the process of the invention may comprise or consist of polymers selected from the group PET, PP, PE (polyethylene) and COC (cyclic olefin copolymer.

The plastic material may have any two or three dimensional shape like film or a container or a part of a container. The coating may also be applied on a first shaped body (preform) which is then formed into the container. "Preform" as used in this application is not limited to any shaped body, especially not to preforms of a bottle and may characterize any first shaped body which is used to produce the final container by another shaping process. Fig. 1 shows a typical preform for a bottle.

Yet another object of the invention is a process to manufacture a container by subjecting a optionally pre-treated preform of the container, to a process comprising the already described coating steps a, b and c and subsequently shaping the preform into the final shape of the container. Preferable, shaping the preform is performed by a blowing process like stretch blowing or injection stretch blow moulding.

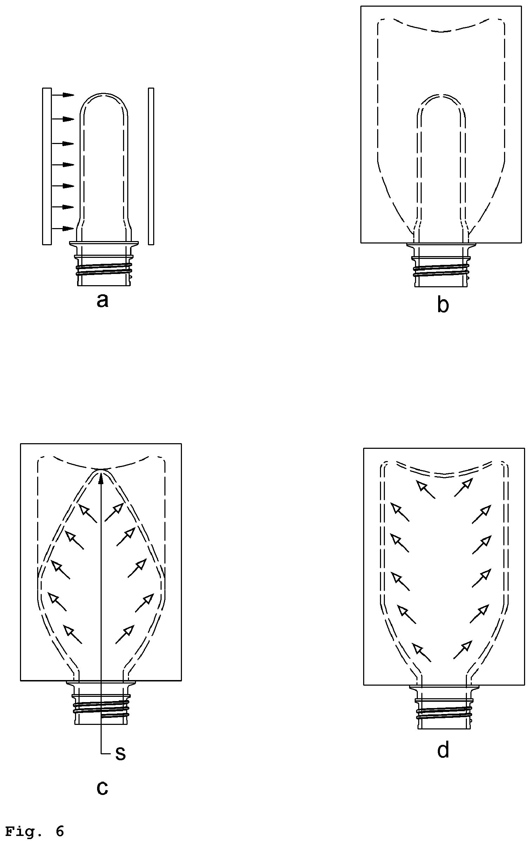

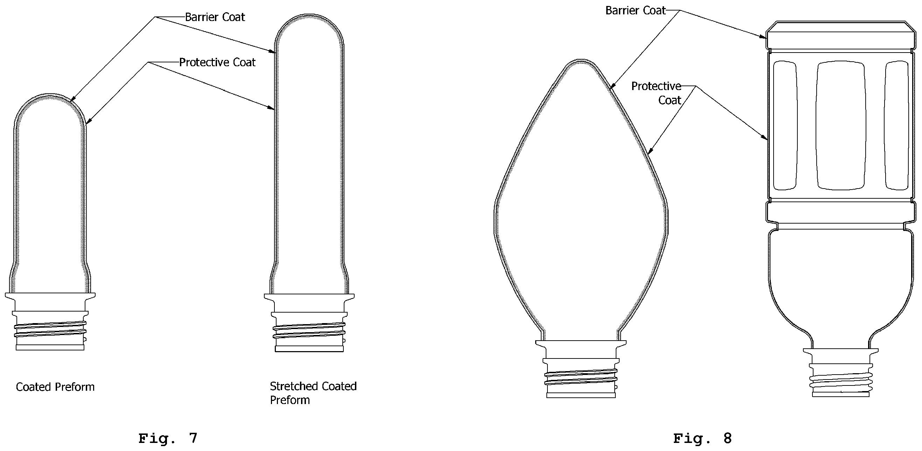

A stretch blow process for the invention is shown by way of example in Fig. 6. In step a, the preform is first heated and then transferred into the mould (b). After stretching by force s and pre-blowing (step c), the bottle is finally blown in step d. Figure 7 shows a coated preform according to the invention (a) which can be stretched without damaging the coating (b). The stretched preform of Fig. 7 can be converted into a stretched pre-blown coated preform as shown in Fig 8a, which is finally inflated (blown) to a coated bottle (Fig. 8b)

The coating according to the invention may be applied to the outside or the inside or both sides of the container.

The containers coated by the process of the invention may be used for food, or beverages, drugs, spices, coffee, tea or chemicals. The container may have a shape selected from the group consisting of capsules, blister packages, sachets, envelopes, jerry cans, bottles, jars and lids thereof.

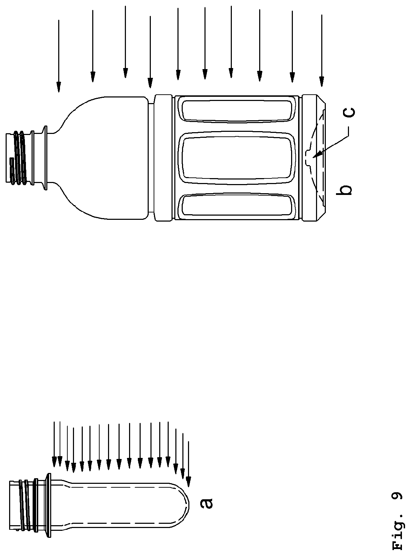

The advantage of the process according to the invention is that the coating is flexible enough to survive a stretch blow process, yet mechanically and chemically stable enough to protect packed goods. Fig. 9 shows a comparison of preform and bottle plasma treatment and coating. Smooth non-obstracted preform shapes allow good access for surface treatment and uniform coating (Fig. 9a). Side bottle grooves, curved-in bottom and side panels are difficult to reach areas for plasma surface treatment, easy to melt and result in coating uneven distribution with accumulation in the grooves and panel corners (Fig. 9b).

### EXAMPLES

A PET sheet was coated without pre-treatment with layers as shown in table 1. Then, the moisture resistance was analysed by first conditioning in a climate chamber (23°C / 98% r.h.) and weighting after 1, 3, 5 and 10 days using an analytical balance to obtain the absorbed moisture. The value for the absorbed moisture content was determined by calculation of the mass difference before and after conditioning in the climate chamber. The determined difference was calculated as percentage.

Table 1 shows the measured value for the layer system A/B/A according to the invention and a layer system C/D according to the prior art.

The layer system corresponding to the invention as described herein shows a 10% lower gas transmission rate after 10 days of conditioning due to better moisture protection of the barrier layer that the prior art.

**Table 1**

| | Water absorption [%] | |
|---|---|---|
| | A/B/A (according to the invention) | C/D (comparative example) |
| 1 day | 0.8% | 1.8% |
| 3 days | 1.1% | 2.3% |
| 5 days | 1.4% | 2.7% |
| 10 days | 1.4% | 2.7% |

| | | |
|---|---|---|
| A: polyvinyl butyral type Mowital B 30 HH (Kuraray Europe GmbH) B: Vinylalcohol/vinylacetate/ethylene terpolymer type Exceval AQ4104 (Kuraray Europe GmbH) C: polyvinyl alcohol type Mowiol 28-99 (Kuraray Europe GmbH) D: polyvinyl butyral type Mowital B30 HH (Kuraray Europe GmbH) Mowital B30 HH (Kuraray Europe GmbH) has a viscosity of 35-60 m*Pas. Exceval AQ4104 has a viscosity of 3.8-4.5 m*Pas, an ethylene content of less than 10 Mol% and a degree of hydrolysation of 98-99% | | |

### Adhesion Test

In order to show that barrier layers obtained by the process of the invention consisting of PVAE have a significant better adhesion on polyvinyl acetal layer 1 and 3, an adhesion test was performed as peel-off test using flat test bodies (foils).

A polyvinyl acetal film as layer 1 was coated with a PVAE or PVA layer by bar coating as known to a person skilled in the art. This test body was then treated with a lamination glue and laminated on a lamination film (polyethylene). After drying, conditioning in a standard climate (23°C, 50 r.h.) the test body was cut into at least 7 stripes. The stripes were then peeled off using a tensile testing machine and the force measured which is necessary to peel off the PVAE layer from the polyvinyl acetal layer. The best and the worse of the 7 measured values were not recognized and the average value calculated out the other five single values. The higher the values for the peel off forces the better is the adhesion of the barrier layer to the polyvinyl acetal layer.

**Table 2**

| barrier layer | Average adhesion value [N/15mm] |
|---|---|
| Mowiol 28-99 | 1.4 |
| Exceval AQ4104 | 2.7 |
| Exceval HR 3010 | 2.2 |

| | |
|---|---|
| Exceval AQ4104 has a viscosity of 3.8-4.5 m*Pas, an ethylene content of less than 10 Mol% and a degree of hydrolysation of 98-99%. Exceval HR 3010 has a viscosity of 12-16 m*Pas, an ethylene content of less than 10 Mol% and a degree of hydrolysation of 99 -99,4% Mowiol 28-99 is a standard polyvinyl alcohol with a viscosity of 28 m*Pas and a degree of hydrolysation of > 99 % | |

All materials are available from Kuraray Europe GmbH

### Mechanical Stability

A test body of layers polyvinyl acetal (A), PVA or PVAE (B) and layers polyvinyl acetal (A) was prepared by the process of the invention as disclosed in Example 1. Such laminates were subjected to a simple stretch test wherein the maximum factor of stretching, i.e. the ratio of the original size to the size of a test body before observing cracks or failures in the coating layer was determined.

**Table 3**

| barrier layer | Max. stretching factor of the coating layer without detectable defects |
|---|---|
| standard polyvinyl alcohol (Mowiol 28-99) | 4-6 |
| Exceval AQ4104 | 8-11 |
| Exceval HR 3010 | 8-10 |

### Conclusion

As can be seen from table 2, layers of PVAE have a significant better adhesion to polyvinyl acetal than PVA. Table 3 shows that the system PVB/PVAE/PVB obtained by the process of the invention shows a significant better elongation behaviour as the system PVB/PVA/PVB known from the prior art.

These tests show that plastic preforms coated with polyvinyl acetal/PVAE/ polyvinyl acetal can be stretch-blown to a plastic container with less delamination that preforms coated with polyvinyl acetal/PVA/polyvinyl acetal.

Since coatings consisting of polyvinyl acetal/PVAE/ polyvinyl acetal have a better elongation behaviour, the blown containers will have a barrier coating with less cracks or failures than blown containers coated with polyvinyl acetal/PVA/ polyvinyl acetal.

## Claims

1. Process for producing a plastic container with a barrier coating comprising the steps a) applying at least one coating layer of a first polyvinyl acetal on at least a part of the plastic container; b) applying at least one coating layer of vinylalcohol/vinylacetate/ethylene terpolymer (PVAE) on the first polyvinyl acetal layer; c) applying at least one top coating layer of a second polyvinyl acetal on the PVAE layer.

2. Process according to claim 1 **characterized in that** the plastic container is prior to step a) pre-treated by chemical roughening, oxyfluorination, corona, electron beam or flame treatment.

3. Process according to claim 1 **characterized in that** the at least one coating layer of a first polyvinyl acetal is applied on the plastic container without pre-treatment.

4. Process according to any of the claims 1 to 3, **characterized in that** the barrier coating is applied on at least a part of the outside of the plastic container.

5. Process according to any of the claims 1 to 3, **characterized in that** the barrier coating is applied on at least a part of the inside of the plastic container.

6. Process according to any of the claims 1 to 3, **characterized in that** the barrier coating is applied on at least a part of the inside and at least a part of the outside of the plastic container.

7. Process according to any of the claims 1 to 6, **characterized in that** the PVAE has a hydrolysation degree of 80 to 99 Mol%.

8. Process according to any of the claims 1 to 7, **characterized in that** the PVAE has a content of ethylene groups of 1 to 20 Mol%.

9. Process according to any of the claims 1 to 8, **characterized in that** the PVAE has a viscosity of 10 - 100 m*Pas, as measured in 10 % by Wght solution in ethanol containing 5 Wght. % water at 20°C.

10. Process according to any of the claims 1 to 9, **characterized in that** the first polyvinyl actetal has a viscosity of 10 to 70 m*Pas, as measured in 10 % by Wght solution in ethanol containing 5 Wght. % water at 20°C.

11. Process according to any of the claims 1 to 9, **characterized in that** the second polyvinyl actetal has a viscosity of 50 to 500 m*Pas, as measured in 10 % by Wght solution in ethanol containing 5 Wght. % water at 20°C.

12. Process according to any of the claims 1 to 11, **characterized in that** subsequent to the steps a, b and c the plastic container is shaped in a blowforming process.

13. Process according to any of the claims 1 to 12 **characterized in that** the first and second polyvinyl acetal is selected from the group consisting of polyvinyl(n)butyral, polyvinyl(iso)butyral, polyvinyl acetyl-co-(n)butyral, crosslinked polyvinyl(n)butyral, crosslinked polyvinyl(iso)butyral, Vinylalcohol/vinylacetate/ethylene terpolymer-(n)butyral, Vinylalcohol/vinylacetate/ethylene terpolymer-acetyl-co-(n)butyral.

## Patentansprüche

1. Verfahren für die Herstellung eines Kunststoffbehälters mit einer Barrierebeschichtung, umfassend die Schritte a) Auftragen mindestens einer Beschichtungsschicht aus einem ersten Polyvinylacetal auf mindestens einen Teil des Kunststoffbehälters; b) Auftragen mindestens einer Beschichtungsschicht aus Vinylalkohol/Vinylacetat/Ethylenterpolymer (PVAE) auf die erste Polyvinylacetalschicht; c) Auftragen mindestens einer Deckbeschichtungsschicht aus einem zweiten Polyvinylacetal auf die PVAE-Schicht.

2. Verfahren nach Anspruch 1, **dadurch gekennzeichnet, dass** der Kunststoffbehälter vor Schritt a) durch chemisches Aufrauen, Oxyfluorierung, Corona-, Elektronenstrahl- oder Flammenbehandlung vorbehandelt wird.

3. Verfahren nach Anspruch 1, **dadurch gekennzeichnet, dass** die mindestens eine Beschichtungsschicht aus einem ersten Polyvinylacetal auf den Kunststoffbehälter ohne Vorbehandlung aufgetragen wird.

4. Verfahren nach irgendeinem der Ansprüche 1 bis 3, **dadurch gekennzeichnet, dass** die Barrierebeschichtung auf mindestens einen Teil der Außenseite des Kunststoffbehälters aufgetragen wird.

5. Verfahren nach einem der Ansprüche 1 bis 3, **dadurch gekennzeichnet, dass** die Barrierebeschichtung auf mindestens einen Teil der Innenseite des Kunststoffbehälters aufgetragen wird.

6. Verfahren nach einem der Ansprüche 1 bis 3, **dadurch gekennzeichnet, dass** die Barrierebeschichtung auf mindestens einen Teil der Innenseite und mindestens einen Teil der Außenseite des Kunststoffbehälters aufgetragen wird.

7. Verfahren nach einem der Ansprüche 1 bis 6, **dadurch gekennzeichnet, dass** das PVAE einen Hydrolysationsgrad von 80 bis 99 Mol-% aufweist.

8. Verfahren nach einem der Ansprüche 1 bis 7, **dadurch gekennzeichnet, dass** das PVAE einen Gehalt an Ethylengruppen von 1 bis 20 Mol-% aufweist.

9. Verfahren nach einem der Ansprüche 1 bis 8, **dadurch gekennzeichnet, dass** das PVAE eine Viskosität von 10 - 100 m*Pas, wie in einer Lösung von 10 Gew.-% in Ethanol, die 5 Gew.-% Wasser enthält, bei 20 °C gemessen, aufweist.

10. Verfahren nach einem der Ansprüche 1 bis 9, **dadurch gekennzeichnet, dass** das erste Polyvinylacetal eine Viskosität von 10 bis 70 m*Pas, wie in einer Lösung von 10 Gew.-% in Ethanol, die 5 Gew.-% Wasser enthält, bei 20 °C gemessen, aufweist.

11. Verfahren nach einem der Ansprüche 1 bis 9, **dadurch gekennzeichnet, dass** das zweite Polyvinylacetal eine Viskosität von 50 bis 500 m*Pas, wie in einer Lösung von 10 Gew.-% in Ethanol, die 5 Gew.-% Wasser enthält, bei 20 °C gemessen, aufweist.

12. Verfahren nach einem der Ansprüche 1 bis 11, **dadurch gekennzeichnet, dass** auf die Schritte a, b und c hin der Kunststoffbehälter in einem Blasformvorgang gestaltet wird.

13. Verfahren nach einem der Ansprüche 1 bis 12, **dadurch gekennzeichnet, dass** das erste und zweite Polyvinylacetal aus der Gruppe ausgewählt wird bestehend aus Polyvinyl(n)butyral, Polyvinyl(iso)butyral, Polyvinylacetyl-co-(n)butyral, vernetztem Polyvinyl(n)butyral, vernetztem Polyvinyl(iso)butyral, Vinylalkohol/Vinylacetat/Ethylenterpolymer-(n)butyral, Vinylalkohol/Vinylacetat/Ethylenterpolymeracetyl-co-(n)butyral.

## Revendications

1. Procédé de production d'un récipient en plastique avec un revêtement de barrière comprenant les étapes a) d'application d'au moins une couche de revêtement d'un premier polyvinyl acétal sur au moins une partie du récipient en plastique ; b) d'application d'au moins une couche de revêtement de terpolymère alcool vinylique/acétate de vinyle/éthylène (PVAE) sur la première couche de polyvinyl acétal ; c) d'application d'au moins une couche de revêtement de partie supérieure d'un second polyvinyl acétal sur la couche de PVAE.

2. Procédé selon la revendication 1 **caractérisé en ce que** le récipient en plastique est avant l'étape a) prétraité par dépolissage chimique, oxyfluoration, couronne, faisceau d'électrons ou traitement à la flamme.

3. Procédé selon la revendication 1 **caractérisé en ce qu'**au moins une couche de revêtement d'un premier polyvinyl acétal est appliquée sur le récipient en plastique sans pré-traitement.

4. Procédé selon l'une quelconque des revendications 1 à 3, **caractérisé en ce que** le revêtement de barrière est appliqué sur au moins une partie de l'extérieur du récipient en plastique.

5. Procédé selon l'une quelconque des revendications 1 à 3, **caractérisé en ce que** le revêtement de barrière est appliqué sur au moins une partie de l'intérieur du récipient en plastique.

6. Procédé selon l'une quelconque des revendications 1 à 3, **caractérisé en ce que** le revêtement de barrière est appliqué sur au moins une partie de l'intérieur et au moins une partie de l'extérieur du récipient en plastique.

7. Procédé selon l'une quelconque des revendications 1 à 6, **caractérisé en ce que** le PVAE a un degré d'hydrolyse de 80 à 99 % en Moles.

8. Procédé selon l'une quelconque des revendications 1 à 7, **caractérisé en ce que** le PVAE a une teneur en groupes éthylène de 1 à 20 % en Moles.

9. Procédé selon l'une quelconque des revendications 1 à 8, **caractérisé en ce que** le PVAE a une viscosité de 10 à 100 m*Pas, tel que mesuré dans une solution à 10 % en poids en éthanol contenant 5 % en poids d'eau à 20 °C.

10. Procédé selon l'une quelconque des revendications 1 à 9, **caractérisé en ce que** le premier polyvinyl acétal a une viscosité de 10 à 70 m*Pas, tel que mesuré dans une solution à 10 % en poids en éthanol contenant 5 % en poids d'eau à 20 °C.

11. Procédé selon l'une quelconque des revendications 1 à 9, **caractérisé en ce que** le second polyvinyl acétal a une viscosité de 50 à 500 m*Pas, tel que mesuré dans une solution à 10 % en poids en éthanol contenant 5 % en poids d'eau à 20 °C.

12. Procédé selon l'une quelconque des revendications 1 à 11, **caractérisé en ce que** suite aux étapes a, b et c le récipient en plastique est formé dans un processus de soufflage.

13. Procédé selon l'une quelconque des revendications 1 à 12, **caractérisé en ce que** le premier et le second polyvinyl acétal sont choisis dans le groupe constitué par le polyvinyl(n)butyral, le polyviny(iso)butyral, le polyvinyl acétyl-co-(n)butyral, le polyvinyl(n)butyral réticulé, le polyvinyl(iso)butyral réticulé, le terpolymère alcool vinylique/acétate de vinyle/éthylène-(n)butyral, le terpolymère alcool vinylique/acétate de vinyle/éthylène-acétyl-co-(n)butyral.
